# EUROPEAN PATENT SPECIFICATION

(11) **EP 1 997 369 B1**
(45) Date of publication and mention of the grant of the patent: **12.01.2011**
(21) Application number: 07019314.9
(22) Date of filing: 02.10.2007
(51) Int. Cl.: A01K 39/01

(54) **Bird feeder**
Vogelfüttergerät
Mangeoire pour oiseaux

(30) Priority: 30.05.2007 CA 2590572
(43) Date of publication of application: 03.12.2008
(73) Proprietor: Cote, Paul, Knowlton QC J0E 1VO (CA)
(72) Inventor: Cote, Paul, Knowlton QC J0E 1VO (CA)
(74) Representative: Wasmeier, Alfons

(56) References cited:
- EP-A- 1 723 848
- GB-A- 2 421 887
- US-B1- 6 918 353

## Description

### FIELD OF THE INVENTION

The present invention relates to a bird feeder and more particularly, relates to a bird feeder which prevents large birds and other animals from obtaining feed therefrom.

### BACKGROUND OF THE INVENTION

Selective bird feeders are well known in the art and are designed to limit the maximum size of a bird or animal which can access the seed in the feeder. The reasons for excluding certain birds may be many. Thus, as disclosed in United States Patent 3,241,525, there is provided a selective bird feeder which is specific to cardinals. As taught by this patent, a favourite seed of cardinals is a sunflower seed; this seed is also popular with both smaller and larger birds.

Some larger birds will also access the seed within a bird feeder and many such birds, such as crows, grackles, blue jays and the like are considered by some people to be undesirable.

A further problem associated with bird feeders is marauders which gain access to the seeds. In particular, squirrels are well known for their ability to reach the seed in a bird feeder and to devour the same. Many approaches have been tried to discourage or prevent squirrels from reaching the bird feeder, including various types of covers and baffles on poles. These seldom work as squirrels have shown great ingenuity in overcoming such devices.

There are also many proposals in the art for squirrel proof bird feeders which utilize a shroud to cover openings in the side wall of a seed container. The shroud is biased to a first position, usually by a spring member, such that when weight is placed on the shroud, it moves to cover the feed openings. Thus, reference may be had to United States Patents 5,445,109 and 6,945,192 which disclose such arrangements.

US 6 918 353 B1 discloses an anti-squirrel bird feeder apparatus with a seed container, a seed tray mounted below the container, a shroud extending about the container, a cover member, a central tube extending between the tray and an upper portion of the container, as well as a spring member. This type of apparatus comprises a telescopic-operational assemblage with a non-linear geometrically-based closure mechanism comprising a four-bar spring assembly or a four-bar closure mechanism, which requires a large number of assemblies and subassemblies, is of rather complicated structure to operate and is expensive to manufacture.

### SUMMARY OF THE INVENTION

It is an object of the present invention to provide a squirrel proof bird feeder which is relatively inexpensive due to a minimum number of components.

It is a further object of the present invention to provide a squirrel proof bird feeder wherein the seed is transferred from a seed container to a seed tray from which the birds may have access thereto.

According to one aspect of the present invention, there is provided a squirrel resistant bird feeder comprising a seed container, a seed tray mounted below the seed container, a shroud extending about the seed container and the seed tray, at least one opening in a lower portion of the shroud, a spring member mounted internally of the seed container, a first end of the spring member biasing the seed tray, a second end of the spring abutting a portion of the shroud such that the shroud is biased to a first position wherein the at least one opening in the shroud permits access to the seed tray, the shroud being moveable to a second position when a weight on the shroud compresses the spring, the second position denying access to the seed tray, a central tube enclosing the spring and a cover member placed over the shroud.

According to a further aspect of the present invention there is provided a squirrel resistant bird feeder comprising a seed container, a seed tray mounted below the seed container, a shroud extending about at least a portion of the seed container and the seed tray, at least one opening in a lower portion of the shroud, a cover member extending over the shroud and being secured thereto, a central tube extending between the seed tray to an upper portion of the seed container, a center post within the central tube, the center post being secured to the seed tray, the center post extending through the cover member; and a spring member mounted about the center post within the central tube, a first end of the spring member abutting a portion of the seed tray, a second end of the spring being arranged such that the shroud is biased to a first position when the at least one opening in the shroud permits access to the seed tray, the shroud being moveable to a second position when a weight on the shroud compresses the spring, the second position denying access to the seed tray.

The squirrel resistant bird feeder of the present invention utilizes a seed tray which is mounted below a seed container to receive seed therefrom. It is the seed tray which is accessed by the birds. This arrangement eliminates the use of baffles in the side wall of the seed container and also eliminates the use of various guide members in order to maintain alignment between openings in the shroud and the seed container.

The spring member is mounted internally of the seed container and has a central tube enclosing the same to prevent seed from disturbing the functioning of the spring member.

The present invention also utilizes a center post which is attached to the seed tray and which center post extends exteriorly of the cover. A hanger is mounted on the exterior portion of the post. In this embodiment, the hanger prevents removal of the cover and shroud. In order to gain access to the seed container, the hanger is removed and the cover and shroud lifted.

In a preferred embodiment, the cover and the shroud are secured together and conveniently may be formed as a single piece.

The center post, as aforementioned, is preferably attached to the seed tray and has a distal end thereof extending exteriorly of the cover. The hanger may be attached through a hole extending through the center post, the hole being located proximate to the cover such that it maintains the cover (and shroud) in position on the feeder. The post, instead of being attached to the seed tray, could be attached to the central tube to provide an equivalent structure. Other equivalent combinations could be utilized in that the spring may be biased against the bottom of the center tube which in turn will bias the seed tray. The tube may form a portion of the seed container.

Conveniently, a plunger may be utilized to receive one end of the spring member and which plunger has a second end abutting the cover. Thus, it will be the plunger which will move in a vertical direction as any pressure is placed on either the negative grip tube member, the cover or the shroud.

At the upper end of the central tube, there is provided a sealing member to substantially prevent moisture and debris from gaining access to the plunger and central tube. The sealing member is preferably in the form of a boot having an accordion like structure.

In a preferred embodiment, the bird feeder may include a plurality of perches located on the shroud. In such a preferred embodiment, the perches are pivotable between a storage position and a normal use position. The movement between the storage position and normal use position permits the shipping of the bird feeders in a minimal space.

A negative grip tube comprises a tube which is slidable on the hanger and in its normal position, will cover the connection between the hanger and the center post. This member also functions to prevent a squirrel from grabbing onto the hanger and thereby gaining access to the feeder.

As used herein, the center post may be either a rigid metallic member or alternative structures such as a cable may be employed.

### BRIEF DESCRIPTION OF THE DRAWINGS

Having thus generally described the invention, reference will be made to the accompanying drawings illustrating an embodiment thereof, in which:
- Figure 1: is a perspective view of a bird feeder according to one embodiment of the present invention;

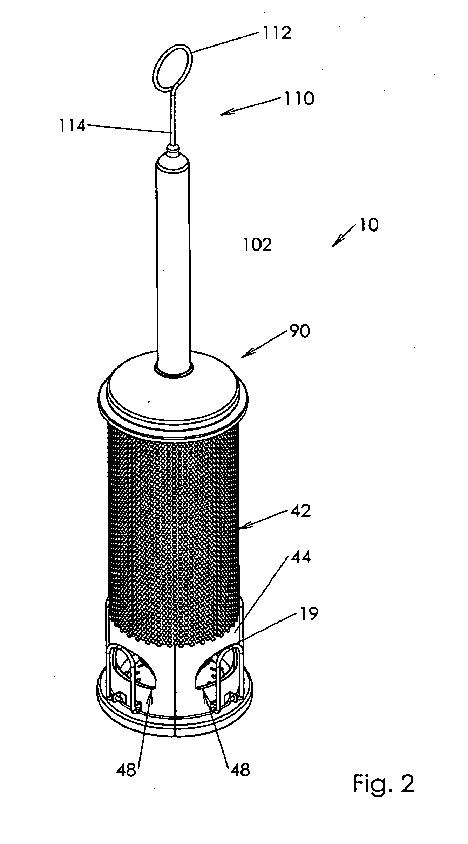

- Figure 2: is a view similar to Figure 1 illustrating the perches in a position for shipping;
- Figure 3: is a sectional view thereof in an open position;

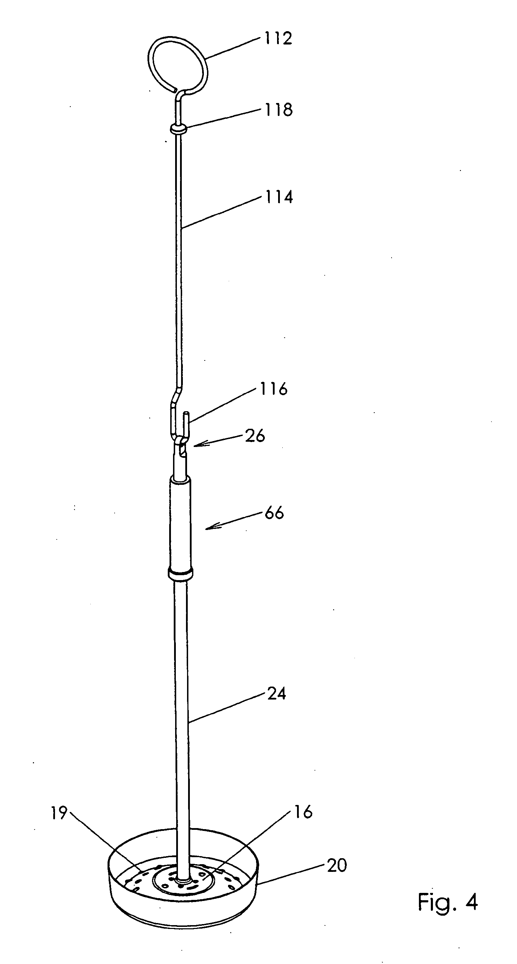

- Figure 4: is a perspective view of the seed tray post secured thereto, and the hanger;

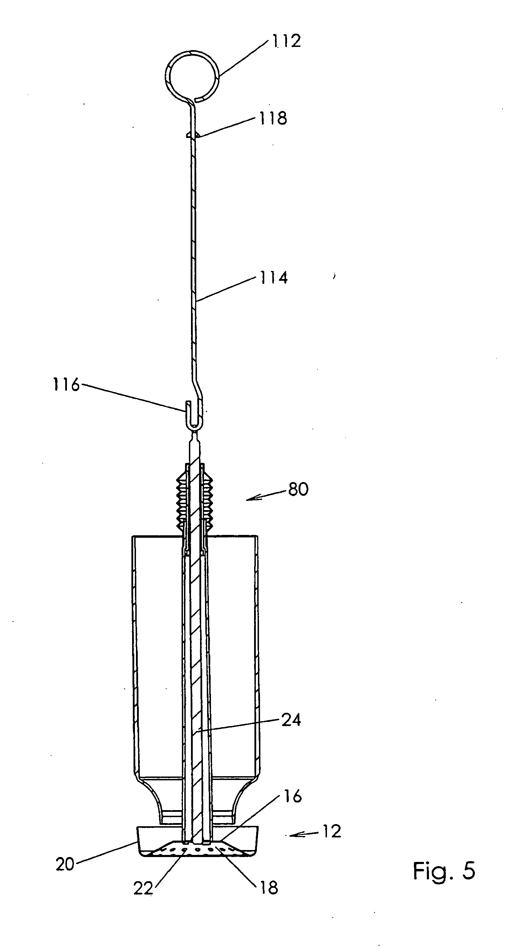

- Figure 5: is a sectional view showing the seed tray and seed container;

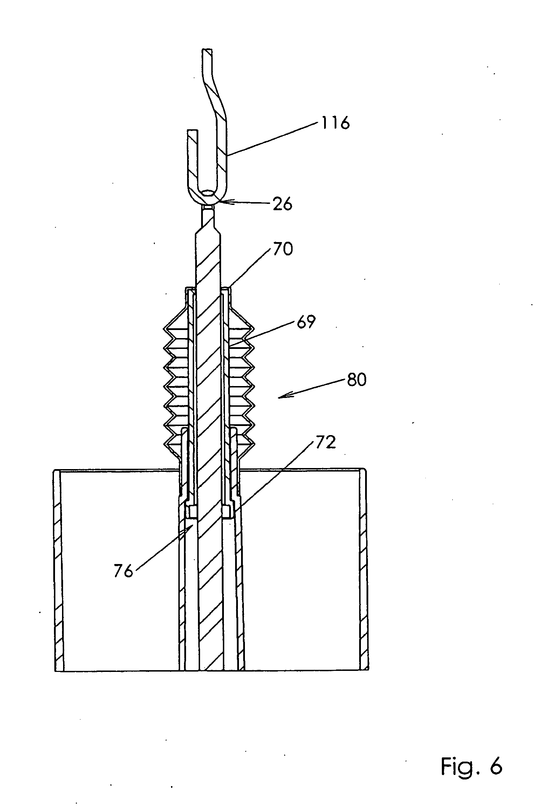

- Figure 6: is an enlarged view of the top portion thereof;
- Figure 7: is a sectional view of the top portion of the feeder in an open position;
- Figure 8: is a sectional view of the bottom portion of the feeder in an open position;
- Figure 9: is a vertical sectional view of the feeder in a closed position when the shroud has descended to cover the feed openings;
- Figure 10: is a sectional view of the top portion of the feeder from Figure 9 in a closed position;
- Figure 11: is a sectional view of the bottom portion thereof in a closed position;

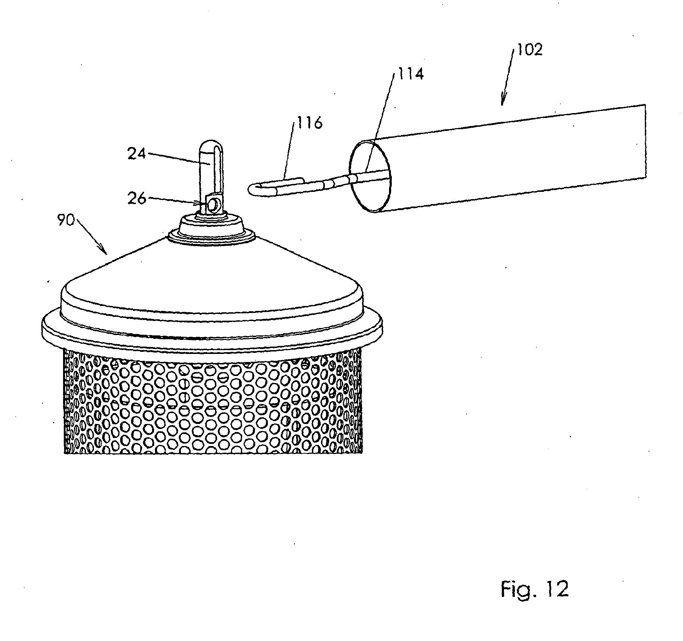

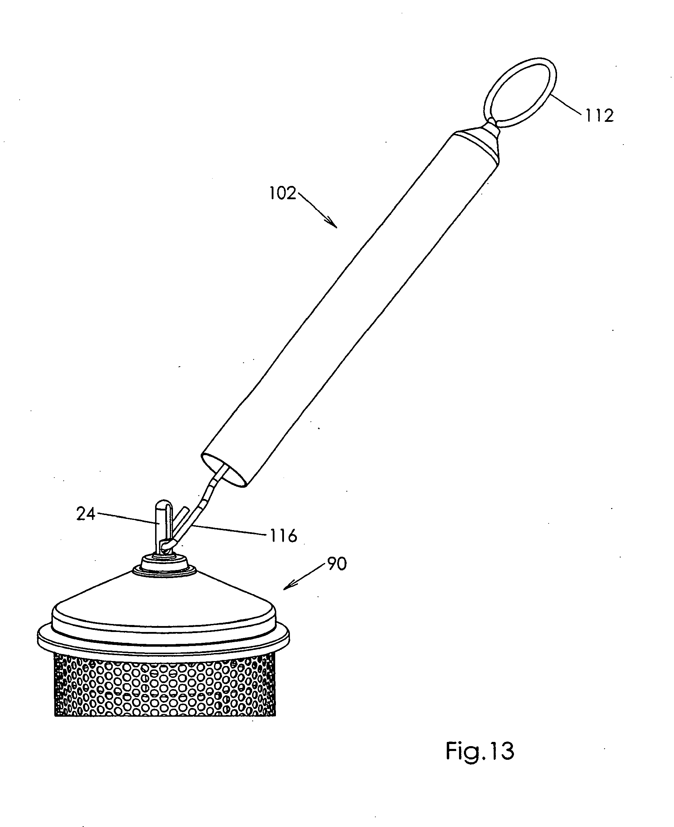

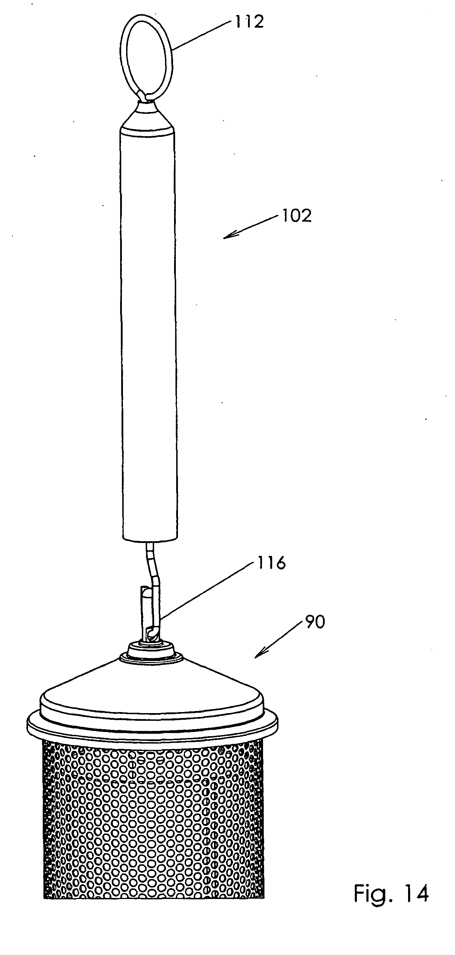

- Figures 12 to 14: are perspective views of the upper portions of the bird feeder showing attachment of the hanging member to the center rod.

### DETAILED DESCRIPTION OF THE INVENTION

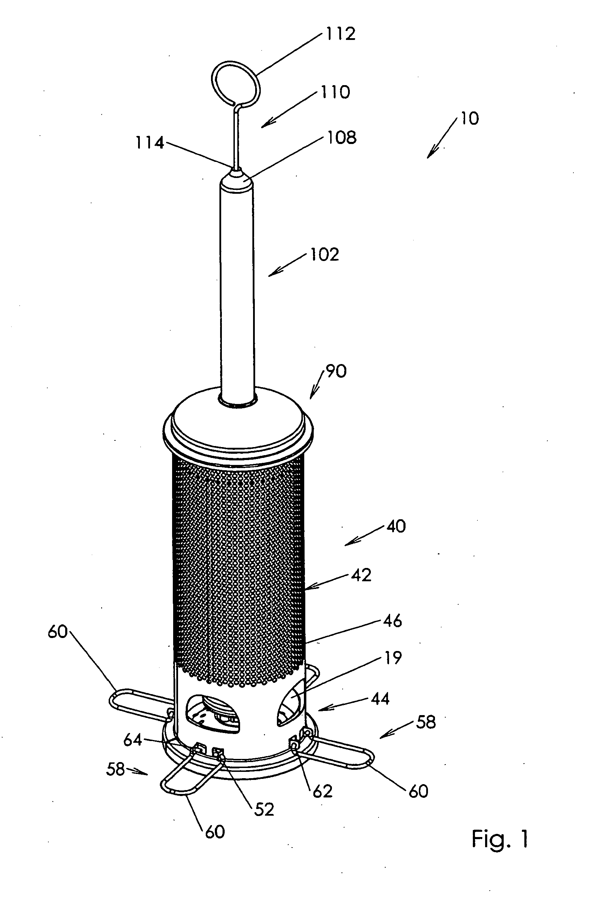

Referring to the drawings in greater detail and by reference characters thereto, there is illustrated in Figure 1 a perspective view of a bird feeder according to one embodiment of the present invention and which bird feeder is generally designated by reference numeral 10.

Bird feeder 10 includes a seed tray which is generally designated by reference numeral 12. Seed tray 12 comprises a base defined by a center horizontal wall 16 which merges with a downwardly sloping wall 18. Downwardly sloping wall 18 then merges with a bottom wall 19 and an upwardly extending side wall 20. A plurality of drainage apertures 22 are provided both in bottom wall 19 and sloping wall 18 to permit the drainage of any moisture from seed tray 12.

Extending upwardly from center wall 16 is a center post 24 which includes an aperture 26 at its upper distal end.

Bird feeder 10 further includes a seed container generally designated by reference numeral 28. Seed container 28 includes a cylindrical side wall 30. At the lower end of seed container 28, there is provided a bottom side wall 34 which extends inwardly for reasons which will become apparent hereinbelow. There is further provided a center tube 36 which surrounds center post 24. Center tube 36 is connected to bottom side wall 34 by means of a plurality of connecting ribs or flanges 38.

Extending about seed tube 28 is a shroud generally designated by reference numeral 40. Shroud 40 includes an upper portion 42 and a lower portion 44. Upper portion 42 includes a plurality of apertures 46 formed therein while lower portion 46 includes feed openings 48 which permit access to seed tray 12 as will be discussed hereinbelow. In the illustrated embodiment, there are provided four such feed openings.

Mounted on lower portion 44 are ears 50, each ear 50 having a base 52 secured to lower portion 44 with a leg 54 extending outwardly therefrom. Each leg 54 includes an aperture 56. As may be seen in the drawings, ears 50 are formed by a punch out in the side wall of lower portion 44 of shroud 40.

In the illustrated embodiment, there are illustrated four perches 58, each having a U-shaped section 60 designed to support a bird. There is also provided an upwardly extending legs 62 and inwardly extending legs 64, the inwardly extending legs 64 seating in apertures 56 as shown in the drawings.

At the upper end of center post 24, there is provided a plunger generally designated by reference numeral 66. Plunger 66 includes a cylindrical body 68 with a top inwardly extending portion 70 abutting against center post 24 and a lower outwardly extending flange 71 which terminates in a downwardly extending wall 72. Downwardly extending wall 72 defines a socket 76 for reasons which will become apparent hereinbelow.

A coil spring member 78 is designed to have one end seat within socket 76 while the other end of spring member 78 seats against center wall 16 of seed tray 12. Thus, spring 78 exerts an upward force against plunger 66.

A cover member 90 is provided for purposes of covering seed tray 12 and seed container 28. Cover 90 includes an upper portion 92 which is secured to shroud 40. As is conventional, cover 90 is also provided with a sloping top wall 96 which merges with a vertical wall 98 designed to fit around the outer circumference of upper portion 42 of shroud 40. In turn, vertical wall 98 merges with a drip edge structure which is generally designated by reference numeral 100 and which drip edge structures are well known in the art.

Provided at the top of bird feeder 10 is a negative grip tube generally designated by reference numeral 102. Negative grip tube 102 includes a cylindrical body 104 having a bottom edge sitting on a horizontal seat 94 of cover 90. At its upper end, negative grip tube 102 includes an inwardly tapered wall 108.

A boot 80 is provided interiorly of shroud 40 and has a lower portion 82 designed to seat about an upper portion of center tube 36 while an upper portion 84 seats about an upper end of plunger 66 and extends inwardly of a portion fitting within cover 90 to thereby provide a sealing effect. A main body portion 86 of boot 80 is formed of an accordion like structure for reasons which will become apparent hereinbelow.

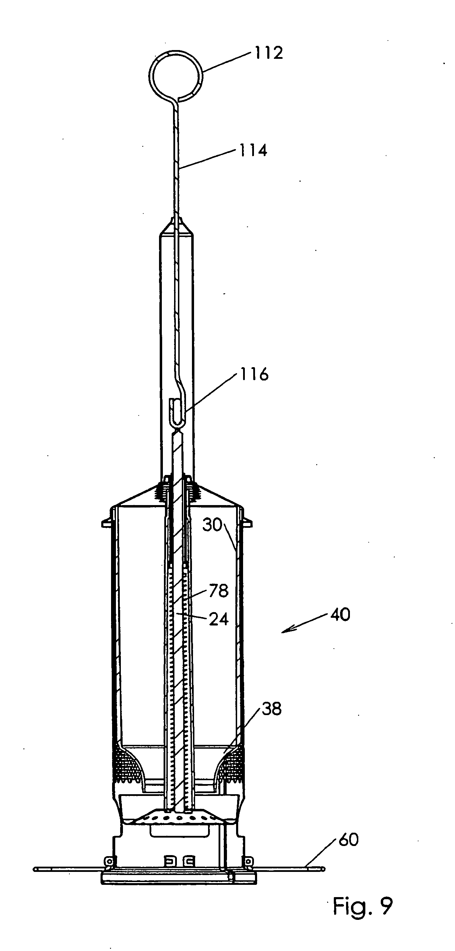

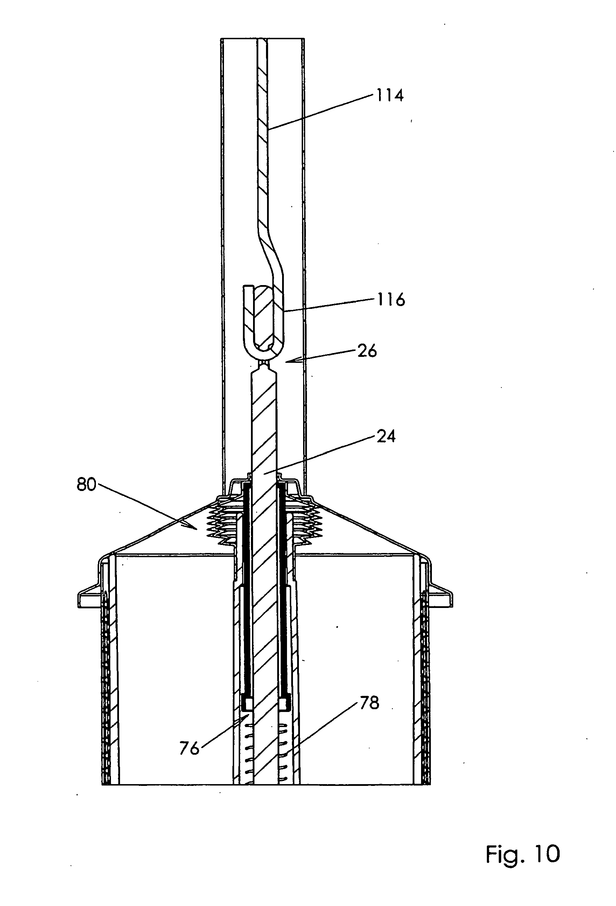

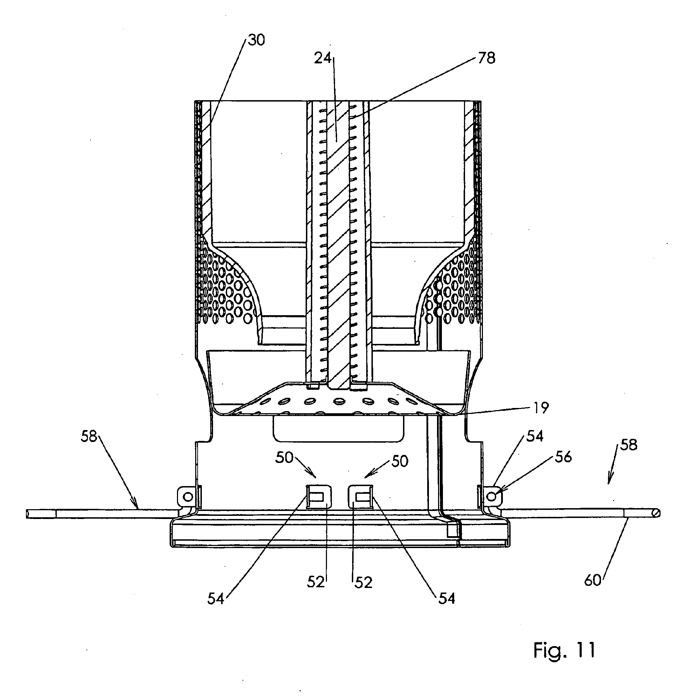

A hanging member 110 is provided to hang the bird feeder 10 from any suitable structure. At its upper end, hanging member 110 is provided with an eye 112. There is provided a main shaft 114 and a hook 116. As may be best seen in Figures 9 to 11, hook 116 is inserted through aperture 26 of center post 24 and then moved upwardly into position. A sealing ring 118 is provided on main shaft 114.

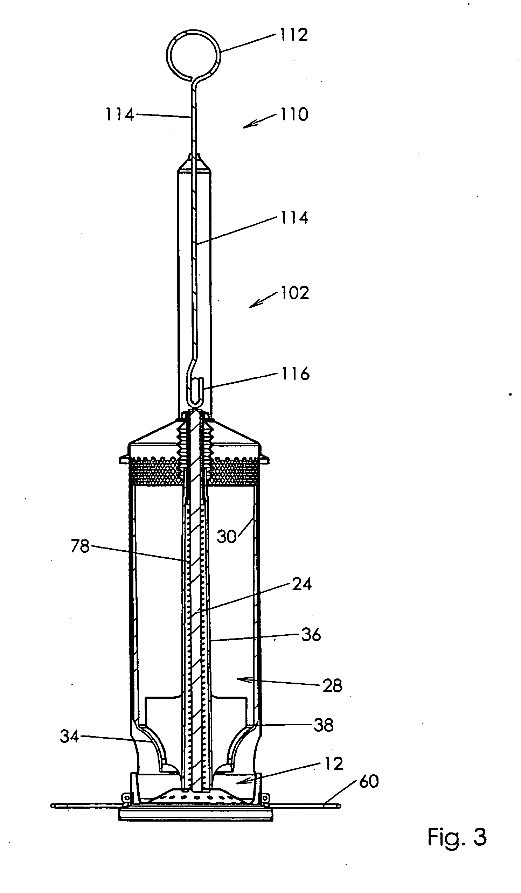

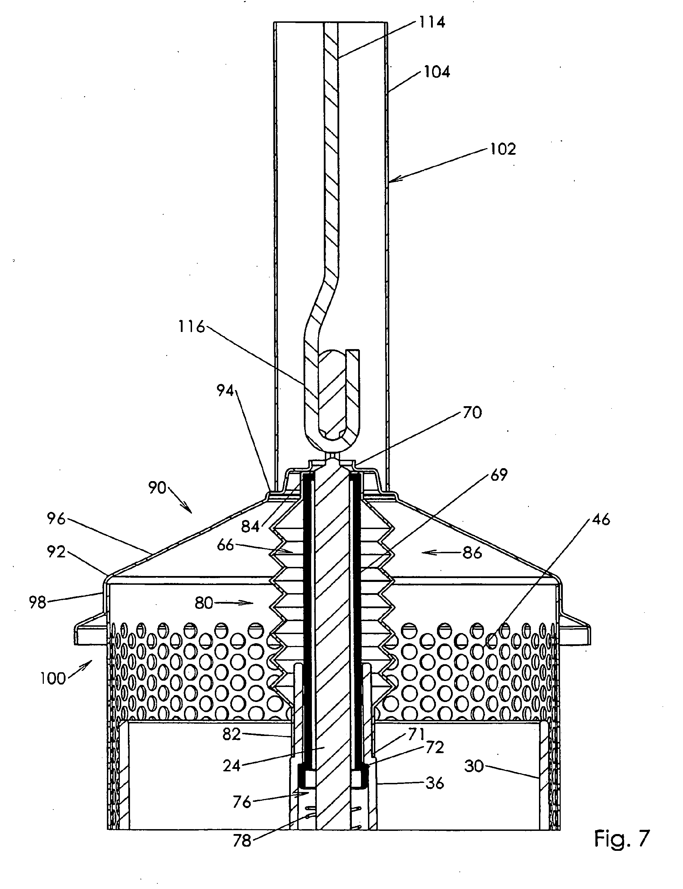

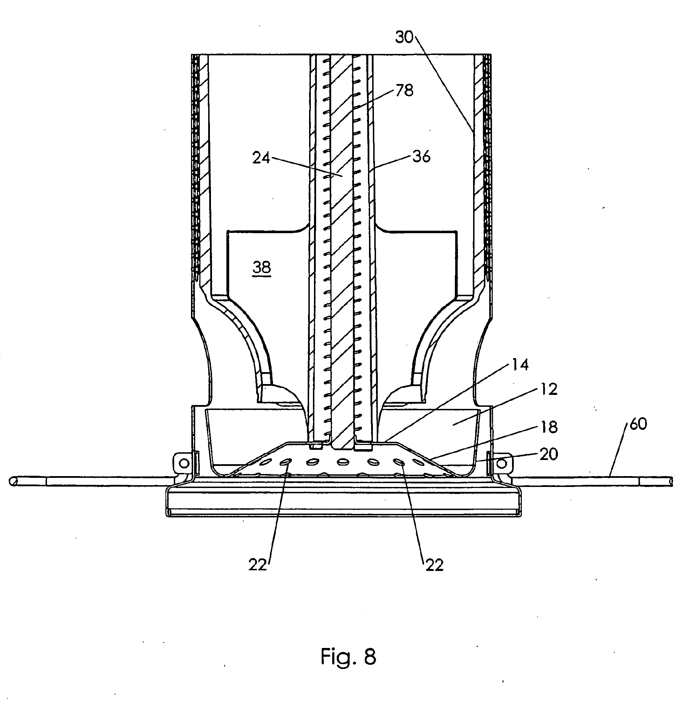

In use, the bird feeder 10 is utilized in the open position shown in Figures 1, 3, 7 and 8. In this arrangement, spring 78 biases plunger 66 upwardly to a stop position. In this position, boot 80 is in extended position as best seen in Figure 7. Shroud 40 is thus maintained in an open position wherein access to seed tray 12 is permitted. The system of the present invention includes a pair of stops to limit the movement of the shroud. Thus, the downward movement of shroud 40 is limited by a stop wherein sidewall 30 of seed container 28 abuts cover 90. The upward movement is limited by flange 71 abutting against the inwardly extending section of center tube 36 as may be best seen in Figure 7.

Upon any pressure being exerted on shroud 40, perches 58, cover 90, or negative grip tube 102, spring 78 is pushed into a compressed or closed position as seen in Figures 9, 10 and 11. It will be noted that boot 80 also compacts to the accordion like structure. Access to seed tray 12 is then denied.

In the open position of Figures 1, 3, 7 and 8, when seeds have been placed within seed tube 28, they are distributed onto seed tray 12. From seed tray 12, access may be had through feed openings 48 such that the birds may feed from the seed tray. However, when a weight such as from a squirrel is placed on any of the exterior components such as shroud 40, perches 58, cover 90 or negative grip tube 102, the shroud 40 will descend to a closed position to cover access to seed tray 12 as may be seen in Figures 9 to 11.

Thus, as may be seen from the above, there is provided an effective squirrel proof feeder which is composed of a minimal number of parts and does not require guiding structures and the like. Accordingly, it becomes relatively inexpensive to manufacture.

## Claims

1. A squirrel resistant bird feeder (10) comprising a seed container (28), a seed tray (12) mounted below said seed container (28), a shroud (40) extending about said seed container and said seed tray (12), a cover member (90), a central tube (36) extending between said seed tray (12) to an upper portion of said seed container (28), and a spring member (78),
**characterized in that**
a) a center post (24) is arranged within said central tube (36), said center post having a first end secured to said seed tray (12) and a second end extending through said cover member (90),
b) at least one opening (48) is provided in a lower portion of said shroud (40),
c) said cover member (90) extends over said shroud (40) and is secured therto,
d) said spring member (78) is mounted about said center post (24) within said central tube (36), a first end of said spring member is seated within a socket (76), and a second end of said spring is seated against the seed tray (12) so that said shroud is biased to an open position when said at least one opening in said shroud permits access to said seed tray, said shroud is moveable to a closed position when a weight on said shroud compresses said spring.

2. The bird feeder of Claim 1 further including at least one perch (58) attached to said shroud (40), said at least one perch being situated below said feed opening (48).

3. The bird feeder of Claim 1 further including a hanger (110) secured to said second end of said center post (24), said hanger preventing removal of said cover member (90) and shroud (40).

4. The bird feeder of Claim 1 wherein said cover member (90) and said shroud (40) are formed as a single piece.

5. The bird feeder of Claim 1 including a plurality of perches (58) attached to said shroud (40) below said feed opening (48), said perches (58) being pivotably mounted thereto.

6. The bird feeder of Claim 3 further including a plunger (66), said plunger being mounted within said central tube (36), said plunger having a lower end forming a socket (76) to receive said second end of said spring (78), a second end of said plunger abutting said cover (90).

7. The bird feeder of Claim 6 further including a compressible sealing member (80) extending about said central tube (36) and said plunger (66).

8. The bird feeder of Claim 3 further including a sealing member (80) extending about an upper end of said central tube (36).

9. The bird feeder of Claim 8 wherein said sealing member (80) has an accordion like structure.

10. The bird feeder of Claim 4 further including a negative grip tube (102) extending about said hanger (110) exteriorly of said cover member (90), said negative grip tube being freely moveable along said hanger.

11. The bird feeder of Claim 1 wherein said shroud (40) has an open bottom.

12. The bird feeder of Claim 1 wherein said seed container (28) is designed to distribute seeds therefrom onto said seed tray (12).

13. The bird feeder of Claim 1 wherein said seed container (28), said central tube (36) and said central post (24) comprise a non moveable structure, said shroud and cover member being moveable with respect thereto.

14. The bird feeder of Claim 1 further including first and second stop members (30/40, 71/36), said first and second stop members limiting movement of said shroud movement between said open and closed positions.

## Patentansprüche

1. Eichhörnchen resistente Vogelfuttervorrichtung (10) umfassend einen Kornbehälter (28), eine unterhalb des Kornbehälters (28) angeordnete Kornablage, eine sich um den Kornbehälter und die Kornablage (12) erstreckende Verkleidung (70), ein Abdeckelement (90), ein sich zwischen der Kornablage (12) zu einem oberen Bereich des Kornbehälters erstreckendes, mittig angeordnetes Rohr (36), und ein Federelement (78), **gekennzeichnet durch**
a) einen innerhalb des mittigen Rohres (36) angeordneten mittigen Stab (24), wobei der mittige Stab ein erstes Ende aufweist, dass an der Kornablage (12) fixiert ist und ein zweites Ende aufweist, dass sich **durch** das Abdeckelement (90) erstreckt,
b) zumindest eine in einem unteren Bereich der Verkleidung (40) vorgesehenen Öffnung (48),
c) das Abdeckelement (90) erstreckt sich über die Verkleidung (40) und ist an dieser fixiert,
d) das Federelement (78) ist um den zentriert angeordneten Stab (24) innerhalb des zentriert angeordneten Rohres (36) montiert, das erste Ende des Federelementes ist innerhalb einer Hülse (76) gelegen, und ein zweites Ende der Feder liegt gegenüber der Kornablage (12) an, so dass die Verkleidung in einer offenen Position gehalten ist, wenn die zumindest eine Öffnung in der Abdeckung einen Zutritt zu der Kornablage ermöglicht, die Verkleidung in eine geschlossene Position bewegbar ist, wenn ein Gewicht auf der Verkleidung die Feder zusammendrückt.

2. Vogelfuttervorrichtung nach Anspruch 1, **gekennzeichnet durch** zumindest eine an der Verkleidung (40) angeordnete Sitzstange (58), wobei die zumindest eine Sitzstange unterhalb der Futteröffnung (48) angeordnet ist.

3. Vogelfuttervorrichtung nach Anspruch 1, **gekennzeichnet durch** einen am zweiten Ende des zentriert angeordneten Stabs (24) befestigten Aufhänger (110) wobei der Aufhänger zur Verhinderung des Entfernens des Abdeckelementes (90) und der Verkleidung (40) ausgebildet ist.

4. Vogelfuttervorrichtung nach Anspruch 1, **dadurch gekennzeichnet, dass** das Abdeckelement (90) und die Verkleidung (40) einstückig ausgebildet sind.

5. Vogelfuttervorrichtung nach Anspruch 1, **gekennzeichnet durch** eine Vielzahl von Sitzstangen (58), die unterhalb der Futteröffnung (48) an der Verkleidung (40) befestigt sind, wobei die Sitzstangen drehbar befestigt sind.

6. Vogelfuttervorrichtung nach Anspruch 3, **gekennzeichnet durch** ein Druckstück (66), das innerhalb des zentriert angeordneten Rohres (36) befestigt ist, wobei das Druckstück ein unteres Ende aufweist, das eine Hülse (76) zur Aufnahme des zweiten Endes der Feder (78) aufweist und ein zweites Ende des Druckstücks gegenüber dem Abdeckelement (90) anliegt.

7. Vogelfuttervorrichtung nach Anspruch 6, **gekennzeichnet durch** ein zusammendrückbares Dichtelement (80), dass sich um das zentriert angeordnete Rohr (36) und das Druckstück (66) erstreckt.

8. Vogelfuttervorrichtung nach Anspruch 3, **gekennzeichnet durch** ein Dichtelement (80) das sich um das obere Ende des zentriert angeordneten Rohres (36) erstreckt.

9. Vogelfuttervorrichtung nach Anspruch 8, **dadurch gekennzeichnet, dass** das Dichtelement (80) eine Ziehharmonikaartige Struktur aufweist.

10. Vogelfuttervorrichtung nach Anspruch 4, **gekennzeichnet durch** eine negative Griffröhre (102), die sich um den Aufhänger (110) außerhalb des Abdeckelementes (90) erstreckt, wobei die negative Griffröhre entlang des Aufhängers frei beweglich ist.

11. Vogelfuttervorrichtung nach Anspruch 1, **dadurch gekennzeichnet, dass** die Verkleidung (40) einen offenen Boden aufweist.

12. Vogelfuttervorrichtung nach Anspruch 1, **dadurch gekennzeichnet, dass** der Kornbehälter (28) zur Verteilung von Korn auf der Kornablage (12) ausgebildet ist.

13. Vogelfuttervorrichtung nach Anspruch 1, **dadurch gekennzeichnet, dass** der Kornbehälter (28) die zentriert angeordnete Röhre (36) und der zentriert angeordnete Stab (24) einen nicht beweglichen Aufbau aufweist, die Verkleidung und das Abdeckelement in Bezug hierauf beweglich sind.

14. Vogelfuttervorrichtung nach Anspruch 1, **gekennzeichnet durch** erste und zweite Begrenzungselemente (30/40, 71/36), wobei die ersten und zweiten Begrenzungselemente die Bewegung der Verkleidung zwischen einer geöffneten und einer geschlossenen Position begrenzen.

## Revendications

1. Mangeoire pour oiseaux (10) résistant aux écureuils, comprenant un récipient à graines (28), un plateau à graines (12) monté en dessous dudit récipient à graines (28), une enveloppe de protection (40) s'étendant autour dudit récipient à graines et dudit plateau à graines (12), un élément de couverture (90), un tube central (36) s'étendant entre ledit plateau à graines (12) et une partie supérieure dudit récipient à graines (28), et un élément ressort (78),
**caractérisé en ce que**
a) un montant central (24) est disposé à l'intérieur dudit tube central (36), ledit montant central ayant une première extrémité fixée audit plateau à graines (12) et une deuxième extrémité s'étendant à travers ledit élément de couverture (90),
b) au moins une ouverture (48) est prévue dans une partie inférieure de ladite enveloppe de protection (40),
c) ledit élément de couverture (90) s'étend au-dessus de ladite enveloppe de protection (40) et est fixée à celle-ci,
d) ledit élément ressort (78) est monté autour dudit montant central (24) à l'intérieur dudit tube central (36), une première extrémité dudit élément ressort est placée à l'intérieur d'une douille (76), et une deuxième extrémité dudit ressort est placée contre le plateau à graines (12) de sorte que ladite enveloppe de protection est poussée dans une position ouverte quand ladite au moins une ouverture dans ladite enveloppe de protection permet l'accès audit plateau à graines, ladite enveloppe de protection pouvant être déplacée dans une position fermée quand un poids sur ladite enveloppe de protection comprime ledit ressort.

2. Mangeoire à oiseaux de la revendication 1 comprenant en outre au moins un perchoir (58) attaché à ladite enveloppe de protection (40), ledit au moins un perchoir étant situé en dessous de ladite ouverture d'alimentation (48).

3. Mangeoire à oiseaux de la revendication 1 comprenant en outre un dispositif de suspension (110) fixé à ladite deuxième extrémité dudit montant central (24), ledit dispositif de suspension empêchant le retrait dudit élément de couverture (90) et de ladite enveloppe de protection (40).

4. Mangeoire à oiseaux de la revendication 1 dans laquelle ledit élément de couverture (90) et ladite enveloppe de protection (40) sont formées d'un seul tenant.

5. Mangeoire à oiseaux de la revendication 1 comprenant une pluralité de perchoirs (58) attachés à ladite enveloppe de protection (40) en dessous de ladite ouverture d'alimentation (48), lesdits perchoirs (58) étant montés de manière pivotante sur celle-ci.

6. Mangeoire à oiseaux de la revendication 3 comprenant en outre un plongeur (66), ledit plongeur étant monté à l'intérieur dudit tube central (36), ledit plongeur ayant une extrémité inférieure formant une douille (76) pour recevoir ladite deuxième extrémité dudit ressort (78), une deuxième extrémité dudit plongeur aboutant à ladite couverture (90).

7. Mangeoire à oiseaux de la revendication 6 comportant en outre un élément d'étanchéité compressible (80) s'étendant autour dudit tube central (36) et dudit plongeur (66).

8. Mangeoire à oiseaux de la revendication 3 comportant en outre un élément d'étanchéité (80) s'étendant autour d'une extrémité supérieure dudit tube central (36).

9. Mangeoire à oiseaux de la revendication 8 dans laquelle ledit élément d'étanchéité (80) a une structure en accordéon.

10. Mangeoire à oiseaux de la revendication 4 comportant en outre un tube de préhension négatif (102) s'étendant autour dudit dispositif de suspension (110) à l'extérieur dudit élément de couverture (90), ledit tube de préhension négatif pouvant être librement déplacé le long dudit dispositif de suspension.

11. Mangeoire à oiseaux de la revendication 1 dans laquelle ladite enveloppe de protection (40) a un dessous ouvert.

12. Mangeoire à oiseaux de la revendication 1 dans laquelle ledit récipient à graines (28) est conçu pour distribuer des graines en provenance de celui-ci sur ledit plateau à graines (12).

13. Mangeoire à oiseaux de la revendication 1 dans laquelle ledit récipient à graines (28), ledit tube central (36) et ledit montant central (24) constituent une structure non déplaçable, ladite enveloppe de protection et ledit élément de couverture étant déplaçables par rapport à celle-ci.

14. Mangeoire à oiseaux de la revendication 1 comportant en outre des premier et deuxième éléments d'arrêt (30 / 40, 71 / 36), lesdits premier et deuxième éléments d'arrêt limitant le déplacement de ladite enveloppe de protection entre lesdites positions ouverte et fermée.
